(19) Europäisches Patentamt
European Patent Office
Office européen des brevets

(11) **EP 4 679 515 A1**

## (12) EUROPEAN PATENT APPLICATION

(43) Date of publication:
**14.01.2026 Bulletin 2026/03**

(21) Application number: **25188229.6**

(22) Date of filing: **08.07.2025**

(51) International Patent Classification (IPC):
**H01M 4/13** *(2010.01)* **H01M 4/38** *(2006.01)*
**H01M 4/62** *(2006.01)*

(52) Cooperative Patent Classification (CPC):
**H01M 4/622; H01M 4/13; H01M 4/386; H01M 4/62; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.07.2024 KR 20240090633**
**04.07.2025 KR 20250090284**

(71) Applicant: **Samsung SDI Co., Ltd.**
**Yongin-si, Gyeonggi-do 17084 (KR)**

(72) Inventors:
• **Jung, Kyunghwa**
**Yongin-si, Gyeonggi-do 17084 (KR)**

• **Cho, Yunshik**
**Yongin-si, Gyeonggi-do 17084 (KR)**
• **Lee, Kukjoo**
**Yongin-si, Gyeonggi-do 17084 (KR)**
• **Lee, Junkyu**
**Yongin-si, Gyeonggi-do 17084 (KR)**
• **Choi, Mingu**
**Yongin-si, Gyeonggi-do 17084 (KR)**
• **Im, Eunhee**
**Yongin-si, Gyeonggi-do 17084 (KR)**
• **Chae, Wonhyung**
**Yongin-si, Gyeonggi-do 17084 (KR)**

(74) Representative: **Meissner Bolte Partnerschaft mbB**
**Patentanwälte Rechtsanwälte**
**Postfach 86 06 24**
**81633 München (DE)**

(54) **NEGATIVE ELECTRODE FOR RECHARGEABLE LITHIUM BATTERY AND RECHARGEABLE LITHIUM BATTERY INCLUDING SAME**

(57) Disclosed are a negative electrode for a rechargeable lithium battery and a rechargeable lithium battery including the same. The negative electrode for the rechargeable lithium battery includes a negative active material layer including a Siincluding negative active material, a binder, a linear carbon conductive material, a dispersant, and an additive having one or more OH functional groups (multifunctional hydroxyl group) and being capable of adsorbing to a surface of the dispersant.

FIG. 1

**Description**

**BACKGROUND**

**1. Field**

The present disclosure relates to a negative electrode for a rechargeable lithium battery and a rechargeable lithium battery including the same.

**2. Description of the Related Art**

Recently, with the rapid spread of electronic devices that use batteries, e.g., mobile phones, laptop computers, and electric vehicles, a demand for or interest in smaller, lighter and relatively high-capacity rechargeable lithium batteries is rapidly increasing. Improving or enhancing performance of rechargeable lithium batteries has been considered.

Rechargeable lithium batteries may include a positive electrode and a negative electrode including an active material capable of intercalating and deintercalating lithium ions, and an electrolyte solution, and electrical energy is produced by oxidation and reduction reactions if lithium ions are intercalated/deintercalated at the positive and negative electrodes.

**SUMMARY**

The present invention provides a negative electrode for a rechargeable lithium battery that exhibits excellent cycle-life characteristic, while good expansion reduction effect and electrical network (e.g., electrical conductivity) are maintained.

The present invention further provides a rechargeable lithium battery including the negative electrode.

According to the invention, a negative electrode for a rechargeable lithium battery includes a negative active material layer including a Si-including negative active material, a binder, a linear carbon conductive material (e.g., a linear carbon electrically conductive material), a dispersant, and an additive having one or more OH functional groups (multifunctional hydroxyl group) and being capable of adsorbing to a surface of the dispersant, wherein the binder is a copolymer including an acryl group and a cyano group.

A rechargeable lithium battery according to the invention includes the negative electrode; a positive electrode, and a non-aqueous electrolyte.

Other embodiments of the present disclosure invention are included in the following detailed description.

The negative electrode for a rechargeable lithium battery may exhibit excellent initial efficiency and electrochemical characteristics.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

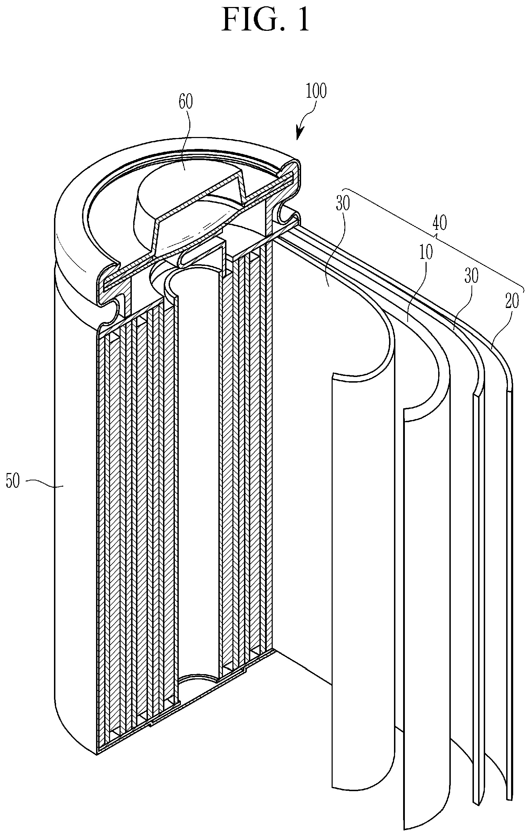

FIG. 1 to FIG. 4 are schematic views showing rechargeable lithium batteries according to one or more embodiments.

**DETAILED DESCRIPTION**

Hereinafter, embodiments of the present disclosure are described in more detail. However, these embodiments are examples, the present disclosure is not limited thereto and the scope of the present disclosure is defined by the scope of the appended claims and equivalents thereof.

As used herein, if a definition is not otherwise provided, it will be understood that if an element such as a layer, film, region, or substrate is referred to as being "on" another element, it may be directly on the other element or intervening elements may also be present.

Unless otherwise specified in the specification, expressions in the singular include expressions in plural. Unless otherwise specified, "A or B" may indicate "includes A, includes B, or includes A and B".

As used herein, the term "combination thereof may include a mixture, a laminate, a complex, a copolymer, an alloy, a blend, or a reactant of constituents (or a reaction product of reactants).

As used herein, if a definition is not otherwise provided, a particle diameter may be an average particle diameter. Such a particle diameter may indicate an average particle diameter (D50) where a cumulative volume is about 50 volume% in a particle size distribution. The average particle diameter (D50) may be measured by any suitable method generally used in the art, for example, by a particle size analyzer, and/or by a transmission electron microscopic (TEM) image, and/or a scanning electron microscopic (SEM) image. In some embodiments, a dynamic light-scattering measurement device may be used to perform a data analysis, and the number of particles is counted for each particle size range, and from this, the average particle diameter (D50) value may be easily obtained through a calculation. The particle diameter may be measured by a laser diffraction method. The laser diffraction method may be performed by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter (D50) in the 50% standard of particle distribution in the measuring device.

In some embodiments, an average particle diameter may be measured by various suitable techniques, and for example, may be measured by a particle size analyzer.

In some embodiments, a thickness may be measured by a SEM and/or a TEM image for the cross-section, but is not limited thereto, and it may be measured by any suitable techniques, as long as it may measure a suitable thickness in the related arts. The thickness may be an average thickness.

In some embodiments, a weight-average-molecular weight may be measured by using gel permeation chromatography.

As used herein, soft carbon refers to graphitizable carbon materials and are readily graphitized by heat treatment at a high temperature, e.g., about 2800 °C, and hard carbon refers to non-graphitizable carbon materials that are substantially or slightly not graphitized by heat treatment. The soft carbon and the hard carbon may be any suitable ones generally used in the related arts.

In some embodiments, the crystalline carbon and the amorphous carbon may be distinguished through X-ray diffraction (XRD) measurement. The crystalline carbon may include natural graphite and/or artificial graphite. Natural graphite may indicate graphite which may be naturally generated by separating it from minerals, and if measured by XRD, an interplanar spacing (d002) of the (002) plane may be about 3.350 Å to about 3.360 Å. Artificial graphite may indicate graphite manufactured by graphitization, and if (e.g., when) measured by XRD, the interplanar spacing (d002) of the (002) plane may be about 3.355 Å to about 3.365 Å. In embodiments, the amorphous carbon may have an interplanar spacing (d002) of the (002) plane of about 3.34 Å or less, if measured by XRD. The XRD may be measured using $CuK\alpha$ ray as a target line with an X-ray diffraction analyzer (e.g., product name: X'Pert, manufacturer: Malvern Panalytical) and by removing a monochromator to improve a peak density resolution. The measurement condition may be $2\theta=10°$ to $80°$, a scan speed (°/S) of 0.044 to 0.089, and a step size (°/step) of 0.013 to 0.039.

In some embodiments, a weight average molecular weight may be measured by gel permeation chromatography.

Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, and/or the like may be used herein to describe certain elements, these elements should not be limited by these terms. These terms are only used to distinguish one element from another element. Thus, a first element could be termed a second element without departing from the teachings of the present disclosure. Similarly, a second element could be termed a first element.

As used herein, expressions such as "at least one of," "one of," "at least one selected from among," and "selected from among," if (e.g., when) preceding a list of elements, modify the entire list of elements and do not modify the individual elements of the list. As utilized herein, the expressions "at least one of A, B, or C", "one of A, B, C, or a combination thereof" and "one of A, B, C, and a combination thereof" refer to each component and a combination thereof (e.g., A; B; A and B; A and C; B and C; or A, B, and C). For example, "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, it is to be understood that the terms such as "including," "includes," "include," "having," "has," "have," "comprises," "comprise," and/or "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The term "combination thereof" may include a mixture, a laminate, a complex, a copolymer, an alloy, a blend, a reactant of constituents.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more" or "some" "embodiments of the present disclosure," each including a corresponding listed item.

In this context, "consisting essentially of" means that any additional components will not materially affect the chemical, physical, optical or electrical properties of the material.

A negative electrode of the invention for a rechargeable lithium battery includes a Si-including negative active material, a binder, a linear carbon conductive material (e.g., a linear carbon electrically conductive material), a dispersant, and an additive having one or more OH functional group (multifunctional hydroxyl group) and being capable of adsorbing to a surface of the dispersant, wherein the binder is a copolymer including an acryl group and a cyano group.

In one or more embodiments, the copolymer which is the binder includes a first monomer, a second monomer, and a third monomer, and e.g., may be an acryl copolymer, and/or an acryl tercopolymer (e.g., an acryl terpolymer).

The binder may be an expansion reduction binder which is capable of suppressing or reducing the volume expansion of the Si-including active material during charge and discharge. The binder may render to suppress or reduce the volume expansion of the Si-including active material, and thus, the reduction in the charge capacity and discharge capacity due to the separation between the active materials or between the active material and the current collector by shrinking or expanding the Si-including active material, may be prevented or reduced.

The first monomer includes an acryloyl group ($CH_2CHCO-$), and examples thereof may be (meth)acrylic acid, metal salts of (meth)acrylic acid, ammonium salts of (meth)acrylic acid, amine salts of (meth)acrylic acid, or a combination thereof, and in some embodiments, it may be metal salts of (meth)acrylic acid.

As used herein, the term "(meth)" may include a methyl group, or it may not include a methyl group. For example, (meth)acrylate indicates acrylate or methacrylate.

In the metal salts of the (meth)acrylic acid, the metal may be alkali metals and/or alkaline-earth metals. For example, the metal salts of the (meth)acrylic acid may be lithium, sodium, potassium, calcium, and/or magnesium. Examples of the metal salts of the (meth)acrylic acid may be sodium acrylate, lithium acrylate, potassium acrylate, calcium acrylate, magnesium acrylate, sodium methacrylate, lithium methacrylate, potassium methacrylate, calcium methacrylate, magnesium methacrylate, or a combination thereof.

Examples of the ammonium salts of the (meth)acrylic acid may be an ammonia-neutralized product of (meth)acrylic acid, monoethanolamine-neutralized product, diethanolamine-neutralized product, hydroxylamine-neutralized product, or a combination thereof.

If the acrylic acid first monomer includes metal salts of (meth)acrylic acid which is partially substituted with metal ions as a first monomer, battery resistance (e.g., electrical resistance) may be reduced and the water solubility of the binder may be increased, thereby improving or enhancing processability the binder.

In some embodiments, in the metal salts of the (meth)acrylic acid, some of the hydrogen atoms may be substituted with a metal or all of the hydrogen atoms may be substituted with a metal. For example, the substitution degree with metal ions of the metal salts of the (meth)acrylic acid may be about 20 mol% to about 100 mol%. The foregoing represents that $H^+$ is substituted with metal$^+$ in acrylic acid in an amount of about 20 mol% to about 100 mol%, if the total acrylic acid is converted to about 100 mol%.

The substitution degree of the metal salts of the (meth)acrylic acid may be confirmed by various suitable physical chemistry analysis generally available in the related arts, for example, an ICP Spectroscopy (Inductively Coupled Plasma Spectroscopy) method.

In some embodiments, the degree of substitution of the metal salts of the (meth)acrylic acid may also be obtained from the mixing ratio of the metal salts of the (meth)acrylic acid and the (meth)acrylic acid, as the first monomer. For example, the substitution degree of the metal salts of the (meth)acrylic acid of about 20 mol% to about 100 mol% may be obtained by mixing the metal salts of the (meth)acrylic acid and (meth)acrylic acid together at a ratio of 20:80 to 100:0 wt%, as the first monomer.

The second monomer may include a cyano group and may be e.g., acrylonitrile.

The third monomer may include an acrylate group, and e.g., a sulfonate group or a sulfonic acid group included (meth)acrylate or an ethyleneglycol group included (meth)acrylate. In one or more embodiments, the third monomer may be a sulfonate group or a sulfonic acid group including (meth)acrylate.

The sulfonic acid group-including (meth)acrylate may be 2-acrylamido-2-methyl-1-propanesulfonic acid and the ethyleneglycol group-including (meth)acrylate may be a polyethyleneglycol methacrylate monomer.

In the binder according to one or more embodiments, a mixing ratio of the first monomer, the second monomer, and the third monomer may be about 1:1.48:0.03 to about 1:0.58:0.08 by weight ratio, about 1:1.12:0.12 to about 1:0.7:0.09, or about 1:0.96:0.1 to about 1:0.67:0.05 by weight ratio. If the mixing ratio of the first monomer, the second monomer, and the third monomer is included in the foregoing ranges, the volume expansion of the Si-including active material may be well suppressed or reduced, the adhesion of the negative active material to the current collector may be further enhanced. An amount of the first monomer may be, based on 100 wt% of the first monomer, the second monomer, and the third monomer, about 40 wt% to about 60 wt%, or about 50 wt% to about 55 wt%. If the amount of the first monomer is within the range, the copolymer may be easily dissolved in water, the dispersibility of the negative active material and the storage stability of the negative active material layer composition may be more enhanced and the occurrence of cracks may be effectively suppressed or reduced in the negative electrode preparation.

An amount of the second monomer may be, based on 100 wt% of the first monomer, the second monomer, and the third monomer, about 35 wt% to about 59 wt% or about 40 wt% to about 50 wt%. If the amount of the second monomer is within the foregoing ranges, the adhesion of the negative active material layer to the current collector may be further enhanced and the dispersibility of the negative active material and the storage stability of the negative active material layer composition may be further enhanced.

An amount the third monomer may be, based on 100 wt% of the first monomer, the second monomer, and the third monomer, about 1 wt% to about 5 wt%, or about 2 wt% to about 3 wt%.

If the amount of the third monomer is within the foregoing ranges, the occurrence of cracks may be more effectively suppressed or reduced in the negative electrode preparation.

If the amounts of the acrylic acid first monomer, the acrylonitrile second monomer, and the (meth)acrylate third monomer satisfy the foregoing ranges, the resulting copolymer may have suitable or appropriate water-solubility, the processability of the negative electrode preparation using the copolymer may be secured, and the resistance (e.g., electrical resistance) of the negative electrode may be effectively reduced.

In one or more embodiments, the binder may be a copolymer including the first monomer, the second monomer, the third monomer, and e.g. a copolymer prepared by polymerizing the first monomer, the second monomer, and the third monomer. The first monomer, the second monomer, and the third monomer may refer to a repeating unit (or, upon polymerization, form a respective repeating unit). For example, the copolymer may include a first repeating unit derived from the first monomer, a second repeating unit derived from the second monomer, and a third repeating unit derived from the third monomer.

In some embodiments, the binder may be prepared by mixing together the first monomer, the second monomer, and the third monomer at a range of a suitable or appropriate amount, adding an initiator and a solvent to the resulting mixture, and reacting the resulting mixture through a copolymerization reaction. The initiator may be any suitable compounds capable of generating copolymerization such as benzoyl peroxide, azobisisobutyronitrile, and/or the like.

An amount of the binder may be, based on 100 wt% of the negative active material layer, about 0.5 wt% to about 3 wt%, about 1 wt% to about 2 wt%, or about 1.2 wt% to about 1.5 wt%. If the amount of the binder satisfies the foregoing ranges, the expansion of the negative electrode may be largely reduced.

In one or more embodiments, the linear carbon conductive material may serve to effectively generate the electrical network between the active materials, thereby suppressing or reducing the decrease in the electrical network (e.g., electrical conductivity) that would otherwise be caused by gaps between the active materials that widen due to the volume expansion of the Si-including active material.

Such effects may be obtained from the linear carbon conductive material (e.g., the linear carbon electrically conductive material), which may well maintain the conductivity (e.g., the electrical conductivity) between active materials, rather than spherical-shaped, e.g., particle-shaped carbon conductive material, and thus, excellent cycle-life retention may be realized.

In one or more embodiments, the linear carbon conductive material (e.g., the linear carbon electrically conductive material) may be carbon nanotubes, carbon nanofiber, or a combination thereof. The carbon nanotubes may be single-walled carbon nanotubes, multi-walled carbon nanotubes, or a combination thereof. In one or more embodiments, the linear carbon conductive material (e.g., the linear carbon electrically conductive material) may be carbon nanotubes, or in another embodiments, the linear carbon conductive material may be single-walled carbon nanotubes.

The carbon nanotubes may have an average diameter of about 1 nm to about 5 nm, or about 1 nm to about 2 nm.

If the average diameter of carbon nanotube is within the foregoing ranges, even if (e.g., when) added in a small amount may provide conductivity (e.g., electrical conductivity) to a large volume (area).

The carbon nanotubes may have an average length of about 10 $\mu$m or less, or about 0.1 $\mu$m to about 10 $\mu$m. If the average length of the carbon nanotubes is within the foregoing ranges, suitable conductivity (e.g., electrical conductivity) may be exhibited and electrolyte impregnation of the negative electrode and ion mobility in the battery may be further enhanced.

In one or more embodiments, the average diameter and the average length of the carbon nanotubes may be an average of the diameter and the length of 20 carbon nanotubes. Among the longer axis and the shorter axis of carbon nanotubes, the shorter axis may be referred to as a diameter and the longer axis may be referred to as a length. The length and diameter of the carbon nanotubes may be measured from an SEM image.

An amount of the liner carbon conductive material (e.g., the linear carbon electrically conductive material) may be, based on 100 wt% of the negative active material layer, about 0.005 wt% to about 0.2 wt%, about 0.01 wt% to about 0.1 wt%, or about 0.03 wt% to about 0.08 wt%. If the amount of the linear carbon conductive material satisfies the foregoing ranges, the electrical conductivity of the negative electrode may be maximized or increased and long cycle-life may be well maintained.

In one or more embodiments, the dispersant may serve to well distribute the binder and the linear carbon conductive material (e.g., the linear carbon electrically conductive material) in the negative active material layer.

The dispersant may be polyvinylpyrrolidone, polyacrylic acid hydrazide, poly-N-vinyl-5-methoxazolidon, N-alkyl polyimine, N-acetyl polyimine, polyacrylamide, poly-L-lysine hydrobromide, benzyl-dodecyl-dimethylammonium chloride, polyethylenimine, or a combination thereof, but is not limited thereto.

In one or more embodiments, the weight average molecular weight (Mw) of the dispersant may be about 30,000 Dalton or more, about 30,000 Dalton to about 100,000 Dalton, or about 30,000 Dalton to about 50,000 Dalton. If the weight average molecular weight (Mw) of the dispersant is within the foregoing ranges, the dispersibility of the Si-including negative active material and the linear carbon conductive material (e.g., the linear carbon electrically conductive material) may be further improved and the stable dispersibility may be maintained even in the slurry in which the active material, the binder, and a conductive material (e.g., an electrically conductive material) are dispersed in liquid and are mixed.

An amount of the dispersant may be, based on 100 wt% of the negative active material layer, about 0.009 wt% to about 0.35 wt%, about 0.02 wt% to about 0.15 wt%, or about 0.05 wt% to about 0.13 wt%. If the amount of the dispersant is within the foregoing ranges, the dispersibility of the carbon nanotubes may be maintained.

In one or more embodiments, the additive may be a compound which has one or more OH functional group and is capable of adsorbing to the surface of the dispersant. Such an additive may be adsorbed to the surface of the dispersant, thereby preventing or reducing the direct contact of the dispersant to materials such as the active material, the binder, and/or the like, and thus, the deterioration of the dispersibility due to the adsorption of the dispersant to the materials such as the active material, the binder, and/or the like may be prevented. Accordingly, the dispersant may effectively improve the dispersion due to the use of the additive.

The negative electrode according to one or more embodiments includes the dispersant together with the additive having a property which may be adsorbed to the surface of the dispersant, and thus, aggregating the dispersant with the Si-including negative active material and the linear carbon conductive material may be effectively suppressed or reduced.

If the additive is used together with the dispersant, aggregating the Si-including negative active material with the linear carbon conductive material (e.g., the linear carbon electrically conductive material) may be effectively suppressed or reduced and, for example, the severe aggregation due to the usage of water in the negative electrode preparation may be further effectively suppressed or reduced. Thus, the Si-including negative active material and the linear carbon conductive material (e.g., the linear carbon electrically conductive material) may be well distributed in the negative active material layer, and thus, the enhanced reduction effect in expansion and high cycle-life retention may be obtained.

In one or more embodiments, the additive may be a polyphenol compound, a polysaccharide compound, or a combination thereof. The polyphenol compound may be tannin, pyrogallol, or a combination thereof, and the polysaccharide compound may be lignin, hyaluronic acid, or a combination thereof.

An amount of the additive may be, based on 100 wt% of the negative active material layer, about 0.003 wt% to about 0.14 wt%, about 0.01 wt% to about 0.07 wt%, or about 0.02 wt% to about 0.06 wt%. If the amount of the additive satisfies the foregoing ranges, the surface of the dispersant may be substantially and completely covered, and thus, the adsorption of the dispersant to the materials such as active material, the binder, and/or the like may be sufficiently suppressed or reduced.

In one or more embodiments, the negative active material may be a Si-including negative active material. The Si-including negative active material may render to exhibit the improved or enhanced current density and high-capacity, but may cause significant volume expansion during charge and discharge. In one or more embodiments, the use of the expansion reduction binder in the negative active material layer may render to effectively suppress or reduce the volume expansion of the Si-including negative active material, and the using of the linear carbon conductive material (e.g., the linear carbon electrically conductive material) may render to sufficiently maintain the electrical network. The using of the dispersant together with the additive may render to uniformly (or substantially uniformly) distribute the Si-including negative active material and the linear carbon conductive material (e.g., the linear carbon electrically conductive material) in the negative active material layer.

The Si-including negative active material may be a silicon-carbon composite. The carbon may include amorphous carbon, or may include amorphous carbon and crystalline carbon. The crystalline carbon may be natural graphite, artificial graphite, or a combination thereof. The amorphous carbon may be soft carbon, hard carbon, mesophase pitch carbide, sintered coke, or a combination thereof.

The silicon-carbon composite may include silicon particles and an amorphous carbon coated on the surface of the silicon particle. For example, the silicon-carbon composite may include silicon particles and an amorphous carbon coating layer on the surface of the silicon particles. In some embodiments, it may include secondary particles (core) where silicon primary particles are agglomerated and an amorphous carbon coating layer (shell) on the surface of the secondary particles. The amorphous carbon may be between the silicon primary particles, for example, to coat on the silicon primary particles. For example, the secondary particle may be presented by being distributed in an amorphous carbon matrix. The silicon primary particles may be nano silicon particles. The nano silicon particle may have a particle diameter of about 10 nm to about 900 nm, about 10 nm to about 800 nm, about 10 nm to about 500 nm, about 10 nm to about 300 nm, or about 10 nm to about 200 nm. If the average particle diameter of the nano silicon particles is within the foregoing ranges, the extreme volume expansion caused during charge and discharge may be suppressed or reduced, and a breakage of the conductive path due to crushing of particle may be prevented or reduced. In some embodiments, the particle diameter of the silicon secondary particle is not necessarily limited.

The amorphous carbon may include a soft carbon, a hard carbon, a mesophase pitch carbonization product, calcined coke, carbon fiber, and/or the like.

The thickness of the amorphous carbon coating layer may be suitably or appropriately adjusted, for example, may be about 2 nm to about 800 nm, about 5 nm to about 600 nm, about 10 nm to about 400 nm, or about 20 nm to about 200 nm. In one or more embodiments, the thickness of the amorphous carbon coating layer may be measured from an SEM image and/or a TEM image for the cross-section of the silicon-carbon composite, but the present disclosure is not limited thereto, and thus, the thickness of the amorphous carbon coating layer may be measured by any suitable techniques as long as the thickness of the amorphous carbon coating layer is suitably measured.

A particle diameter of the silicon-carbon composite may be suitably or appropriately adjusted, and, for example, may be about 30 $\mu$m or less, for example, about 1 $\mu$m to about 30 $\mu$m, about 2 $\mu$m to about 25 $\mu$m, about 3 $\mu$m to about 20 $\mu$m, or about 5 $\mu$m to about 15 $\mu$m.

Based on 100 wt% of the silicon-carbon composite, an amount of the silicon particles may be about 30 wt% to about 70 wt% or about 40 wt% to about 65 wt%. An amount of the amorphous carbon may be, based on the total 100 wt% of the silicon-carbon composite, about 30 wt% to about 70 wt%, or about 35 wt% to about 60 wt%. If the amounts of the silicon particles and the amorphous carbon are within the foregoing ranges, higher capacity may be realized.

In the silicon-carbon composite, the carbon may include amorphous carbon and crystalline carbon. In some embodiments, the silicon-carbon composite may include a core including silicon particles and crystalline carbon, and an amorphous carbon coating layer on a surface of the core. For example, the silicon-carbon composite may include a core including secondary particles where the silicon primary particles and crystalline carbon are agglomerated, and an amorphous carbon coating layer on the core. The amorphous carbon may be between the silicon primary particles or between the crystalline carbon, allowing the amorphous carbon to be filled between the silicon primary particles and the crystalline carbon.

The crystalline carbon may include unspecified shape, sheet, flake, spherical and/or fiber shaped natural graphite and/or artificial graphite.

An amount of the crystalline carbon may be, based on the total 100 wt% of the silicon particle, the amorphous carbon, and the crystalline carbon, about 10 wt% to about 70 wt%, for example, about 20 wt% to about 60 wt%. If the crystalline carbon is included in the above ranges, the conductivity (e.g., electrical conductivity) may be further enhanced.

In the negative electrode according to some embodiments, the negative active material may include a carbon-based negative active material, together with the silicon-based negative active material. If the silicon-based negative active material is used together with the carbon-based negative active material, a mixing ratio of the silicon-based negative active material and the carbon-based negative active material may be about 1:99 to about 50:50 by weight ratio. In some embodiments, the mixing ratio of the silicon-based negative active material and the carbon-based negative active material may be about 5:95 to about 20:80 by weight ratio.

In the negative active material layer, an amount of the negative active material may be, based on 100 wt% of the negative active material layer, about 90 wt% to about 99 wt%, or about 95 wt% to about 98 wt%.

The negative active material layer may further include an adhesion binder generally used in the negative electrode. The adhesion binder may be an aqueous binder. If the negative active material layer further includes the adhesion binder, an amount of the adhesion binder may be suitably or appropriately adjusted, and e.g., it may be, based on the total 100 wt% of the negative active material layer, about 0.1 wt% to about 3 wt%, or about 0.2 wt% to about 2 wt%.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

The negative electrode according to one or more embodiments includes a current collector supporting on the negative active material.

The current collector may include one selected from among a copper foil, a nickel foil, a stainless steel foil, a titanium foil, a nickel foam, a copper foam, a polymer substrate coated with a conductive metal, and one or more combinations thereof, but embodiments of the present disclosure are not limited thereto.

**Rechargeable lithium battery**

The present invention further provides a rechargeable lithium battery including the negative electrode, a positive electrode, and an electrolyte.

**Positive electrode**

The positive electrode may include a current collector and a positive active material layer on the current collector.

The positive active material layer includes a positive active material and may further include a binder and/or a conductive material (e.g., an electrically conductive material).

For example, the positive electrode may further include an additive that may serve as a sacrificial positive electrode.

An amount of the positive active material may be, about 90 wt% to about 99.5 wt% based on 100 wt% of the positive active material layer, and amounts of the binder and the conductive material may be respectively 0.5 wt% to 5 wt% based on 100 wt% of the positive active material layer.

The positive active material may include a compound (lithiated intercalation compound) that is capable of intercalating and deintercalating lithium. In some embodiments, at least one of a composite oxide of lithium and a metal selected from among cobalt, manganese, nickel, or combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, the following compounds represented by any one selected from among the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiGbO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

For example, the positive electrode active material may be a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with a current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxidecontaining polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but are not limited thereto.

The conductive material is included to provide or increase electrode conductivity (e.g., electrical conductivity), and any suitable electrically conductive material may be used as a conductive material unless it causes a chemical change (e.g., substantially does not cause an undesirable chemical change in the rechargeable lithium battery). Examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder and/or a metal fiber including copper, nickel, aluminum, silver, and/or the like; a conductive polymer (e.g., an electrically conductive polymer) such as a polyphenylene derivative; or a mixture thereof.

The current collector may include Al, but is not limited thereto.

**Electrolyte**

The electrolyte includes a non-aqueous organic solvent and a lithium salt.

The non-aqueous organic solvent serves as a medium that transmits ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, γ-butyrolactone, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The organic solvent may be used alone or in a mixture of two or more.

If the carbonate-based solvent is used, the cyclic carbonate and the linear carbonate may be used together therewith, and the cyclic carbonate and the linear carbonate may be mixed at a volume ratio of about 1:1 to about 1:9.

The electrolyte may further include vinylethyl carbonate, vinylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof, as an additive.

The lithium salt dissolved in an organic solvent supplies a battery with lithium ions, basically operates the rechargeable lithium battery, and improves transportation of the lithium ions between positive and negative electrodes. Examples of the lithium salt include one or at least two supporting electrolyte salts selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, where x and y are an integer of 1 to 20, lithium trifluoromethane sulfonate, lithium tetrafluoroethane sulfonate, lithium difluorobis(oxalato)phosphate (LiDFBOP), and lithium bis(oxalato) borate (LiBOB).

**Separator**

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed together multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a coating layer including an organic material, an inorganic material, or a combination thereof on one or both surfaces (e.g., one or two opposing surfaces) of the porous substrate.

The porous substrate may be a polymer film formed of any one selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, and/or a copolymer or mixture of two or more thereof.

The organic material may include a polyvinylidene fluoride-based polymer and/or a (meth)acryl-based polymer.

The inorganic material may be an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto.

The organic material and an inorganic material may be mixed in one coating layer, or a coating layer including an organic material and a coating layer including an inorganic material may be stacked.

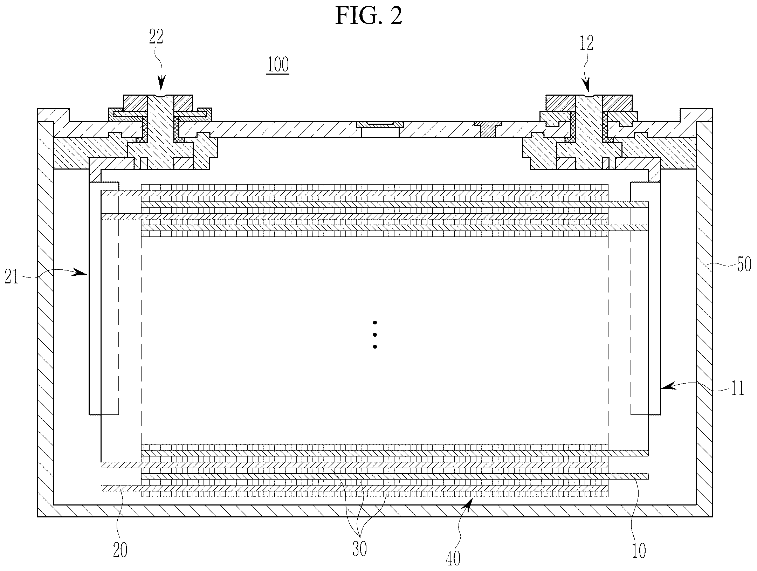

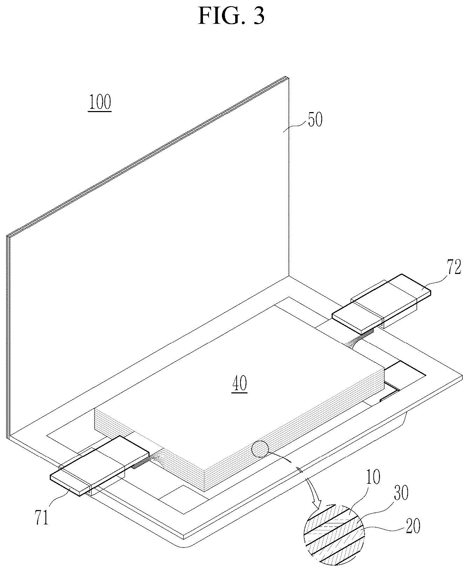

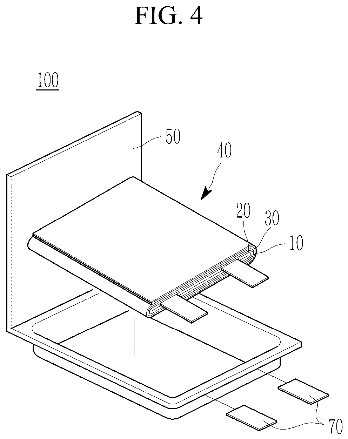

The rechargeable lithium battery may be classified into cylindrical, prismatic, pouch, or coin-type batteries, and/or the like depending on their shape. FIG. 1 to FIG. 4 are schematic views illustrating rechargeable lithium batteries according to embodiments, and FIG. 1 shows a cylindrical battery, FIG. 2 shows a prismatic battery, and FIG. 3 and FIG. 4 show pouch-type batteries. Referring to FIGS. 1-4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte. The rechargeable lithium battery 100 may include a sealing member 60 that seals the case 50, as shown in FIG. 1. In FIG. 2, the rechargeable lithium battery 100 may include a positive electrode lead tab 11 and a positive terminal 12, a negative electrode lead tab 21, and a negative terminal 22. As shown in FIG. 3 and FIG. 4, the rechargeable lithium battery 100 may include an electrode tab 70 (FIG. 4), which may serve as an electrical path that induces the current formed in the electrode assembly 40 to the outside, for example, may include a positive electrode tab 71 and a negative electrode tab 72 (FIG. 3).

The rechargeable lithium battery according to an embodiment may be applied to automobiles, mobile phones, and/or various suitable types (or kinds) of electric devices, as non-limiting examples.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Example.

**Example 1**

An acrylic acid (AA) first monomer, an acrylonitrile (AN) second monomer, and a 2-acrylamido-2-methyl-1-propane sulfonic acid (AMPS) third monomer were added to a reactor at an amount of 55 wt%, 40 wt%, and 5 wt%, respectively, and then a benzoyl peroxide initiator and water were added to the reactor to induce a copolymerization reaction (or a terpolymerization reaction).

Sodium hydroxide was added to the resulting copolymerization reaction product and agitated to prepare a binder aqueous solution (solid content: 6 wt%) including a copolymer (or terpolymer) of the first monomer, the second monomer, and the third monomer, as an expansion reduction binder. A used amount of sodium hydroxide was adjusted to substitute 60 mol% of the first monomer with sodium ions, and thus the resulting product was prepared as a copolymer binder (or a terpolymer binder) including sodium polyacrylate, in which 60 mol% of an acrylic group included in the acrylic acid first monomer was substituted with sodium ions. The sodium ion substitution degree of the acrylic acid first monomer was found to be 60 mol% by measuring the ICP Spectroscopy.

The silicon-carbon composite negative active material (average particle diameter D50: 10 $\mu$m), the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The silicon-carbon composite included an agglomerated product in which artificial graphite and silicon nanoparticles were agglomerated and a soft carbon coating layer on the surface of the agglomerated product. An amount of artificial graphite was 40 wt%, an amount of the silicon nanoparticles was 40 wt%, and an amount of the soft carbon was 20 wt% based on the total weight of the silicon-carbon composite.

The negative active material layer slurry was coated on the copper current collector, dried, and pressurized to prepare a negative electrode.

96 wt% of a $LiNi_{0.8}Co_{0.1}Mn_{0.1}O_2$ positive active material, 2 wt% of Ketjen black, and 2 wt% of polyvinylidene fluoride were mixed in an N-methyl pyrrolidone solvent to prepare a positive active material layer slurry. The positive active material layer slurry was coated on an Al foil current collector, dried, and pressurized to prepare a positive electrode.

Using the negative electrode, the positive electrode, and an electrolyte, a full cell was fabricated. As the electrolyte, 1.5 M $LiPF_6$ dissolved in ethylene carbonate, ethylmethyl carbonate, and dimethyl carbonate (20:10:70 volume ratio), was used.

**Example 2**

A negative electrode was prepared by the same procedure as in Example 1, except that the acrylic acid (AA) first monomer, the acrylonitrile (AN) second monomer, and the 2-acrylamido-2-methyl-1-propanesulfonic acid (AMPS) third monomer were used in amounts of 50 wt%, 45 wt%, and 5 wt%, respectively, and tannin was used as the additive, instead of lignin.

A full cell was fabricated by substantially the same procedure as in Example 1, except for using the negative electrode.

**Example 3**

A negative electrode and a full cell were fabricated by substantially the same procedure as in Example 2, except that pyrogallol was used as the additive, instead of tannin.

**Example 4**

A negative electrode and a full cell were fabricated by substantially the same procedure as in Example 2, except that lignin was used as the additive, instead of tannin.

**Example 5**

A negative electrode and a full cell were fabricated by substantially the same procedure as in Example 2, except that hyaluronic acid was used as the additive, instead of tannin.

**Example 6**

An acrylic acid (AA) first monomer, an acrylonitrile (AN) second monomer, and a 2-acrylamido-2-methyl-1-propane sulfonic acid (AMPS) third monomer were added to a reactor at an amount of 45 wt%, 50 wt%, and 5 wt%, respectively, and then a benzoyl peroxide initiator and water were added to the reactor to induce a copolymerization reaction (or a terpolymerization reaction).

Sodium hydroxide was added to the resulting copolymerization reaction product and agitated to prepare a binder aqueous solution (solid content: 6 wt%) including a copolymer of the first monomer, the second monomer, and the third monomer, as an expansion reduction binder. A used amount of sodium hydroxide was adjusted to substitute 60 mol% of the first monomer with sodium ions, and thus the resulting product was prepared as a copolymer binder (or a terpolymer binder) including sodium polyacrylate, in which 60 mol% of an acryl group included in the acrylamide first monomer was substituted with sodium ions. The sodium ion substitution degree of the acrylamide first monomer was found to be 60 mol% by measuring the ICP Spectroscopy.

The negative active material of Example 1, the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode in which the negative active material layer was formed on the current collector.

A full cell was fabricated by substantially the same procedure as in Example 1, except for using the negative electrode.

## Example 7

An acrylic acid (AA) first monomer, an acrylonitrile (AN) second monomer, and a poly(ethylene glycol) methacrylate (PEGMA) third monomer were added to a reactor at an amount of 50 wt%, 45 wt%, and 5 wt%, and then a benzoyl peroxide initiator and water were added to the reactor to induce a copolymerization reaction (or a terpolymerization reaction).

Sodium hydroxide was added to the resulting copolymerization reaction product and agitated to prepare a binder aqueous solution including a copolymer of the first monomer, the second monomer, and the third monomer, as an expansion reduction binder. A used amount of sodium hydroxide was adjusted to substitute 60 mol% of the first monomer with sodium ions, and thus the resulting product was prepared as a copolymer binder including lithium polyacrylate, in which 60 mol% of an acrylic group included in the acrylic acid first monomer was substituted with sodium ions. The sodium ion substitution degree of the acrylic acid first monomer was found to be 60 mol% by measuring the ICP Spectroscopy.

The negative active material of Example 1, the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode.

## Comparative Example 1

Carboxymethyl cellulose (CMC) was added to water to prepare a binder aqueous solution with a solid content of 1 wt%.

The silicon-carbon composite negative active material (average particle diameter D50: 10 $\mu$m), the binder aqueous solution (solid content: 1 wt%), the single-walled carbon nanotube (SWCNT, average diameter: 1 nm to 2 nm, average length: <10 $\mu$m), a polyvinylpyrrolidone dispersant (PVP, Mw: 30KDa), a hyaluronic acid additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode.

**Comparative Example 2**

An acrylic acid (AA) first monomer, and a 2-acrylamido-2-methyl-1-propane sulfonic acid (AMPS) third monomer were added to a reactor at an amount of 95 wt% and 5 wt%, respectively, and then a benzoyl peroxide initiator and water were added to the reactor to induce a copolymerization reaction.

Sodium hydroxide was added to the resulting copolymerization reaction product and agitated to prepare a binder aqueous solution (solid content: 6 wt%) including a copolymer of the first monomer and the third monomer, as an expansion reduction binder. A used amount of sodium hydroxide was adjusted to substitute 60 mol% of the first monomer with sodium ions, and thus the resulting product was prepared as a copolymer binder including sodium polyacrylate, in which 60 mol% of an acrylic group included in the acrylic acid first monomer was substituted with sodium ions. The sodium ion substitution degree of the acrylic acid first monomer was found to be 60 mol% by measuring the ICP Spectroscopy.

The negative active material of Example 1, the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode.

**Comparative Example 3**

An acrylonitrile (AN) second monomer and a 2-acrylamido-2-methyl-1-propane sulfonic acid (AMPS) third monomer were added to a reactor at an amount of 95 wt% and 5 wt%, respectively, and then a benzoyl peroxide initiator and water were added to the reactor to induce a copolymerization reaction to prepare a binder aqueous solution (solid content: 6 wt%) including a copolymer of the second monomer, and the third monomer, as an expansion reduction binder.

The negative active material of Example 1, the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode in which the negative active material layer was formed on the current collector.

A full cell was fabricated by substantially the same procedure as in Example 1, except for using the negative electrode.

**Comparative Example 4**

An acrylic acid (AA) first monomer and an acrylonitrile (AN) second monomer were added to a reactor at an amount of 60 wt% and 40 wt%, respectively, and then a benzoyl peroxide initiator and water were added to the reactor to occur a copolymerization reaction.

Sodium hydroxide was added to the resulting copolymerization reaction product and agitated to prepare a binder aqueous solution (solid content: 6 wt%) including a copolymer of the second monomer and the third monomer, as an expansion reduction binder. A used amount of sodium hydroxide was adjusted to substitute 60 mol% of the first monomer with sodium ions, and thus the resulting product was prepared as a copolymer binder including sodium polyacrylate, in which 60 mol% of an acrylic group included in the acrylic acid first monomer was substituted with sodium ions. The sodium ion substitution degree of the acrylic acid first monomer was found to be 60 mol% by measuring the ICP Spectroscopy.

The negative active material of Example 1, the binder aqueous solution (solid content: 6 wt%), the single-walled carbon nanotube (SWCNT, average diameter: 1 nm to 2 nm, average length: <10 $\mu$m), a polyvinylpyrrolidone dispersant (PVP, Mw: 30KDa), a lignin additive were mixed in order to have 98.33 wt%, 1.4 wt% (amount of the binder included in the aqueous solution: 1.4 wt%), 0.07 wt%, 0.15 wt%, and 0.05 wt%, respectively, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode.

**Comparative Example 5**

The silicon-carbon composite negative active material used in Example 1, the binder aqueous solution (solid content: 6 wt%) and carbon black were mixed in order to have 98.33 wt%, 1.4 wt% (amount of the binder included in the aqueous solution: 1.4 wt%) and 0.27 wt%, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode.

**Comparative Example 6**

The negative active material of Example 1, the binder aqueous solution (solid content: 6 wt%), the single-walled carbon nanotube (SWCNT, average diameter: 1 nm to 2 nm, average length: <10 $\mu$m), and a polyvinylpyrrolidone dispersant (PVP, Mw: 30KDa) were mixed in order to have 98.33 wt%, 1.4 wt% (amount of the binder included in the aqueous solution: 1.4 wt%), 0.07 wt% and 0.2 wt%, respectively, to prepare a negative active material layer slurry.

The negative active material layer slurry was coated on the copper current collector, dried, and pressurized to prepare a negative electrode.

A full cell was fabricated by substantially the same procedure as in Example 1, except for using the negative electrode

The binder composition, the conductive material, the dispersant, and the additive of Examples 1 to 7 and Comparative Examples 1 to 6 are summarized in Table 1.

Table 1

| | Binder composition | | | Conductive material | Dispersant | Additive |
|---|---|---|---|---|---|---|
| | First monomer (wt%) | Second monomer (wt%) | Third monomer (wt%) | | | |
| Example 1 | AA 55 | AN 40 | AMPS 5 | SWCNT | PVP | Lignin |
| Example 2 | AA 50 | AN 45 | AMPS 5 | SWCNT | PVP | Tanninl |
| Example 3 | AA 50 | AN 45 | AMPS 5 | SWCNT | PVP | Pyrogall o |
| Example 4 | AA 50 | AN 45 | AMPS 5 | SWCNT | PVP | Lignin |
| Example 5 | AA 50 | AN 45 | AMPS 5 | SWCNT | PVP | Hyaluro nic acid |
| Example 6 | AA 45 | AN 50 | AMPS 5 | SWCNT | PVP | Lignin |
| Example 7 | AA 50 | AN 45 | PEGMA 5 | SWCNT | PVP | Lignin |
| Comparative Example 1 | CMC | - | - | SWCNT | PVP | Hyaluro nic acid |
| Comparative Example 2 | AA 95 | - | AMPS 5 | SWCNT | PVP | Lignin |
| Comparative Example 3 | - | AN 95 | AMPS 5 | SWCNT | PVP | Lignin |
| Comparative Example 4 | AA 60 | AN 40 | - | SWCNT | PVP | Lignin |
| Comparative Example 5 | AA 55 | AN 40 | AMPS 5 | CB | - | - |
| Comparative Example 6 | AA 55 | AN 40 | AMPS 5 | SWCNT | PVP | - |

**Experimental Example 1) Evaluation of average particle diameter, D50 of negative active material**

The binder used in Examples 1 to 7 and Comparative Examples 1 to 6, the conductive material (single-walled carbon nanotube), the dispersant, and the additive were added to the water solvent to prepare a distribution liquid. In the distribution liquid, the average particle diameter (D50) of the single-walled carbon nanotubes was measured by using a particle size analyzer (Product name: PSA Series, Manufacturer: Anton Paar). Regarding the average particle diameter (D50, A) of the single-walled carbon nanotubes used in the negative electrode preparation, an increase ratio of the average particle diameter (D50, B) of the single-walled carbon nanotubes was determined by Equation 1. The results are shown in

Table 2.

## Equation 1

$$\text{Increase ratio (\%)} = [(B-A)/A]*100$$

**Experimental Example 2) Evaluation of carbon nanotube (CNT)**

The aggregation of carbon nanotubes in the negative electrode according to Examples 1 to 7 and Comparative Examples 1 to 6 were measured by an SEM image. The results are shown in Table 2. In Table 2, X indicates no aggregation and O indicates occurrence of aggregation. As Comparative Example 5 used the carbon black conductive material, this test was not conducted therefor.

**Experimental Example 3) Evaluation of negative electrode expansion ratio**

The full cells according to Examples 1 to 7 and Comparative Examples 1 to 6 were charged and discharged 100 times under a condition of 0.5 C constant currentconstant voltage (CC-CV), 4.2 V, and 0.05 C cut-off charge and 0.5 C constant current (CC) and 2.5 V cut-off discharge. A thickness of the negative electrode before charging and discharging and a thickness after charging and discharging were measured and an expansion ratio of the negative electrode was calculated by Equation 2.

$$\text{Expansion ratio (\%)} = \{\text{cell thickness after charging and discharging -cell thickness before charging and discharging)/cell thickness before charging and discharging}\}*100 \qquad \text{Equation 2}$$

**Experimental Example 4) Evaluation of cycle-life retention**

The full cells according to Examples 1 to 7 and Comparative Examples 1 to 6 were charged and discharged 100 times under a condition of 0.5 C constant currentconstant voltage (CC-CV) 4.2 V, 0.05 C cut-off charge and 0.5 C constant current (CC), 2.5 V cut-off discharge. A ratio of charge capacity at 100th cycle relative to charge capacity at a 1st cycle was calculated. The results are shown in Table 2, as capacity retention (or cycle-life retention).

Table 2

| | Increase rate of D50 (%) | Aggregation of CNT in negative electrode | Negative electrode expansion ratio (%) | Cycle-life retention (%) |
|---|---|---|---|---|
| Example 1 | 8 | X | 38 | 98 |
| Example 2 | 7 | X | 40 | 99 |
| Example 3 | 8 | X | 40 | 99 |
| Example 4 | 7 | X | 41 | 99 |
| Example 5 | 6 | X | 39 | 99 |
| Example 6 | 3 | X | 45 | 97 |
| Example 7 | 6 | X | 43 | 99 |
| Comparative Example 1 | 3 | X | 55 | 90 |
| Comparative Example 2 | 20 | O | 40 | 95 |
| Comparative Example 3 | Impossible to measure, as the binder was insoluble | | | |
| Comparative Example 4 | 6 | X | 39 | 95 |
| Comparative Example 5 | - | - | 39 | 93 |
| Comparative Example 6 | 20 | O | 40 | 89 |

As shown in Table 2, Example 1 to 7 exhibited an increase rate of D50 of 3 % to 8% which was substantially lower than Comparative Example 2 and did not exhibit aggregation of CNT in the negative electrode. Furthermore, Examples 1 to 7 exhibited low negative electrode expansion rate and surprisingly excellent capacity retention (or cycle-life retention).

Comparative Example 1 using the CMC binder exhibited a low increase rate of D50 and did not exhibit aggregation of CNT in the negative electrode, but exhibited a very high negative electrode expansion rate and low capacity retention (or low cycle-life retention).

Comparative Example 2 using the expansion reduction binder without the second monomer exhibited somewhat low negative electrode expansion rate, but exhibited an extremely high increase rate of D50, exhibited aggregation of CNT in the negative electrode, and exhibited low cycle-life characteristics.

In case of Comparative Example 3 using the copolymer binder without the first monomer, the binder was insoluble, and thus, the subsequent experiments could not be conducted.

Comparative Example 4 using the copolymer binder without the third monomer exhibited high battery resistance due to the absence of the third monomer, causing slightly low cycle-life retention.

Comparative Example 5 using the same expansion reduction binder to Example 4, but using the carbon black conductive material exhibited low negative electrode expansion rate, but exhibited low cycle-life retention.

Comparative Example 6 using the same expansion reduction binder to Example 1, but using no additive exhibited an extremely high increase rate of D50, exhibited aggregation of CNT in the negative electrode, and exhibited low cycle-life retention.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

While the subject matter of this disclosure has been described in connection with what is presently considered to be practical example embodiments, it is to be understood that the present disclosure is not limited to the disclosed embodiments, but, on the contrary, is intended to cover various suitable modifications and equivalent arrangements included within the spirit and scope of the appended claims, and equivalents thereof.

**Claims**

1. A negative electrode for a rechargeable lithium battery, comprising;

   a negative active material layer comprising a Si-including negative active material, a binder, a linear carbon conductive material, a dispersant, and an additive having one or more OH functional groups and being capable of adsorbing to a surface of the dispersant,
   wherein the binder is a copolymer comprising an acryl group and a cyano group.

2. The negative electrode for a rechargeable lithium battery as claimed in claim 1, wherein the additive is a polyphenol compound, a polysaccharide compound, or a combination thereof.

3. The negative electrode for a rechargeable lithium battery as claimed in claim 1 or 2, wherein the additive is tannin, pyrogallol, lignin, hyaluronic acid, or a combination thereof.

4. The negative electrode for a rechargeable lithium battery as claimed in any of claims 1-3, wherein the dispersant has a weight average molecular weight (Mw) of 30,000 Dalton or more.

5. The negative electrode for a rechargeable lithium battery as claimed in any of claims 1-4, wherein the binder is an expansion reduction binder.

6. The negative electrode for a rechargeable lithium battery as claimed in any of claims 1-5, wherein the copolymer comprises a first monomer, a second monomer, and a third monomer,

   the first monomer comprises an acryloyl group,
   the second monomer comprises a cyano group, and
   the third monomer comprises an acrylate group.

7. The negative electrode for a rechargeable lithium battery as claimed in claim 6, wherein an amount of the first monomer is 40 wt% to 60 wt% based on 100 wt% of the copolymer.

8. The negative electrode for a rechargeable lithium battery as claimed in claim 6, wherein the first monomer is (meth) acrylic acid, metal salts of (meth)acrylic acid, ammonium salts of (meth)acrylic acid, amine salts of (meth)acrylic acid, or a combination thereof.

9. The negative electrode for a rechargeable lithium battery as claimed in claim 8,

wherein in the metal salts of the (meth)acrylic acid, the metal is an alkali metal, an alkaline-earth metal, or a combination thereof; and/or
wherein the metal salts of the (meth)acrylic acid has a substitution degree with metal ions of 20 mol% to 100 mol%.

10. The negative electrode for a rechargeable lithium battery as claimed in claim 6, wherein the second monomer is acrylonitrile.

11. The negative electrode for a rechargeable lithium battery as claimed in any of claims 1-10, wherein the copolymer further comprises a sulfonate group or an ethyleneglycol group including (meth)acrylate as a third monomer.

12. The negative electrode for a rechargeable lithium battery as claimed in claim 11, wherein the third monomer is 2-acrylamido-2-methyl-1-propanesulfonic acid, or a polyethyleneglycol methacrylate monomer, preferably wherein the third monomer is 2-acrylamido-2-methyl-1-propanesulfonic acid.

13. The negative electrode for a rechargeable lithium battery as claimed in any of claims 1-12,

wherein the linear carbon conductive material is carbon nanotubes, carbon nanofiber, or a combination thereof; and/or
wherein an amount of the linear carbon conductive material is 0.005 wt% to 0.2 wt% based on 100 wt% of the negative active material layer.

14. The negative electrode for a rechargeable lithium battery as claimed in any of claims 1-13,

wherein an amount of the binder is 0.5 wt% to 3 wt% based on 100 wt% of the negative active material layer; and/or
wherein an amount of the dispersant is 0.009 wt% to 0.35 wt% based on 100 wt% of the negative active material layer; and/or
wherein an amount of the additive is 0.003 wt% to 0.14 wt% based on 100 wt% of the negative active material layer.

15. A rechargeable lithium battery, comprising:

a negative electrode as claimed in any one of claim 1 to claim 14;
a positive electrode; and
a non-aqueous electrolyte.

# FIG. 1

FIG. 2

# FIG. 3

# FIG. 4

## EUROPEAN SEARCH REPORT

**Application Number**

EP 25 18 8229

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 316 359 A1 (ZEON CORP [JP]) 2 May 2018 (2018-05-02) | 1-15 | INV. H01M4/13 |
| Y | * paragraphs [0007] - [0010], [0015], [0018] - [0019], [0027], [0030], [0052] - [0116], [0170] - [0199], [0223]; table 1 * | 1-15 | H01M4/38 H01M4/62 |
| | ----- | | |
| Y | EP 4 220 775 A1 (SAMSUNG SDI CO LTD [KR]) 2 August 2023 (2023-08-02) * paragraphs [0003], [0005] - [0012], [0020] - [0032], [0055]; figure 1; example 1 * | 1-15 | |
| | ----- | | |
| Y | WO 2024/143508 A1 (KURARAY CO [JP]) 4 July 2024 (2024-07-04) * paragraphs [0009], [0070] - [0072] * & EP 4 645 474 A1 (KURARAY CO [JP]) 5 November 2025 (2025-11-05) | 1-3, 13-15 | |
| | ----- | | |

**TECHNICAL FIELDS SEARCHED (IPC)**

H01M

The present search report has been drawn up for all claims

| Place of search | Date of completion of the search | Examiner |
|---|---|---|
| The Hague | 28 November 2025 | Bravo Diaz, Laura |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 25 18 8229

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2025

| Patent document cited in search report | | Publication date | Patent family member(s) | | Publication date |
|---|---|---|---|---|---|
| EP 3316359 | A1 | 02-05-2018 | CN | 107710468 A | 16-02-2018 |
| | | | CN | 115084525 A | 20-09-2022 |
| | | | EP | 3316359 A1 | 02-05-2018 |
| | | | HU | E055080 T2 | 28-10-2021 |
| | | | KR | 20180021698 A | 05-03-2018 |
| | | | PL | 3316359 T3 | 02-11-2021 |
| | | | US | 2018301744 A1 | 18-10-2018 |
| | | | WO | 2016208190 A1 | 29-12-2016 |
| EP 4220775 | A1 | 02-08-2023 | EP | 4220775 A1 | 02-08-2023 |
| | | | KR | 20230112434 A | 27-07-2023 |
| | | | US | 2023231109 A1 | 20-07-2023 |
| WO 2024143508 | A1 | 04-07-2024 | CN | 120380618 A | 25-07-2025 |
| | | | EP | 4645474 A1 | 05-11-2025 |
| | | | JP | WO2024143508 A1 | 04-07-2024 |
| | | | KR | 20250126735 A | 25-08-2025 |
| | | | TW | 202439664 A | 01-10-2024 |
| | | | WO | 2024143508 A1 | 04-07-2024 |

EPO FORM P0459

For more details about this annex : see Official Journal of the European Patent Office, No. 12/82